# EUROPEAN PATENT APPLICATION

(11) **EP 2 424 026 A1**
(43) Date of publication of application: **29.02.2012**
(21) Application number: 11178458.3
(22) Date of filing: 23.08.2011
(51) Int. Cl.: H01M 8/10

(54) **Fuel cell electrolyte membrane, membrane electrode assembly, fuel cell and method of manufacturing fuel cell electrolyte membrane**

(30) Priority: 31.08.2010 JP 2010194839
(71) Applicant: AISIN SEIKI KABUSHIKI KAISHA, Kariya-shi, Aichi 448-8650 (JP)
(72) Inventor: Tatematsu, Koji, Kariya-shi, Aichi 448-8650 (JP)
(74) Representative: TBK

(57) **Abstract**

A fuel cell electrolyte membrane includes a first electrolyte membrane formed from a basic polymer including a phosphoric acid, and second and third electrolyte membranes each formed from a basic polymer including a phosphoric acid and clamping the first electrolyte membrane between the second and third electrolyte membranes. The phosphoric acid contained in the first electrolyte membrane is greater than the phosphoric acid contained in each of the second and third electrolyte membranes in concentration.

## Description

### CROSS REFERENCE TO RELATED APPLICATIONS

This application is based on and claims priority under 35 U.S.C. § 119 to Japanese Patent Application 2010-194839, filed on August 31, 2010, the entire content of which is incorporated herein by reference.

### TECHNICAL FIELD

This disclosure generally relates to a fuel cell electrolyte membrane, a membrane electrode assembly, a fuel cell, and a method of manufacturing the fuel cell electrolyte membrane.

### BACKGROUND DISCUSSION

A fuel cell has been drawing attention as clean energy for the next generation. For example, a polymer electrolyte fuel cell (PEFC) includes a membrane electrode assembly (MEA) as a basic component. The membrane electrode assembly is obtained by bonding and integral forming of an anode gas diffusion electrode, a polymer membrane (i.e., an electrolyte membrane) including ionic conductivity, and a cathode gas diffusion electrode.

As the fuel cell electrolyte membrane, a membrane including a complex of basic polymer and strong acid such as a polymer membrane of polybenzimidazole doped with phosphoric acid has been attracting attention. JP2008-507082A (hereinafter referred to as Reference 1) discloses that a fuel cell using a membrane doped with phosphoric acid is operable at a temperature greater than 100 °C without a humidification of fuel. In addition, it is know that polybenzimidazole is appropriate for polymer used in the electrolyte membrane.

However, the electrolyte membrane doped with the phosphoric acid is generally in a sol-gel state, which may lead to a damage upon pressing, for example. Therefore, in order to decrease the damage on a pressure plate, a membrane electrode assembly, and a polymer membrane at a time of pressing, Reference 1 discloses a method for manufacturing the membrane electrode assembly using an incompressible protective layer and a shim.

In a case where the incompressible protective layer and the shim are used when pressing as described in Reference 1, the damage on the polymer membrane may decrease to some degree. However, because a dimension accuracy of a gas diffusion layer (GDL) constituting an electrode greatly varies, it may be difficult to decrease the damage of the polymer membrane caused by stick-out of the gas diffusion electrode relative to the polymer membrane. As a result, a cross leakage (i.e., a leak current) is generated, thereby decreasing durability.

A need thus exists for a fuel cell electrolyte membrane, a membrane electrode assembly, a fuel cell, and a method of manufacturing the fuel cell electrolyte membrane which are not susceptible to the drawback mentioned above.

### SUMMARY

According to an aspect of this disclosure, a fuel cell electrolyte membrane includes a first electrolyte membrane formed from a basic polymer including a phosphoric acid, and second and third electrolyte membranes each formed from a basic polymer including a phosphoric acid and clamping the first electrolyte membrane between the second and third electrolyte membranes. The phosphoric acid contained in the first electrolyte membrane is greater than the phosphoric acid contained in each of the second and third electrolyte membranes in concentration.

According to another aspect of this disclosure, a method of manufacturing a fuel cell electrolyte membrane includes a first electrolyte membrane manufacturing process for manufacturing a first electrolyte membrane by depositing a basic polymer including a phosphoric acid, a second electrolyte membrane manufacturing process for manufacturing a second electrolyte membrane by depositing a basic polymer including a phosphoric acid that has a concentration lower than a concentration of the phosphoric acid contained in the first electrolyte membrane, a third electrolyte membrane manufacturing process for manufacturing a third electrolyte membrane by depositing a basic polymer including a phosphoric acid that has a concentration lower than the concentration of the phosphoric acid contained in the first electrolyte membrane, and a fuel cell electrolyte membrane manufacturing process for manufacturing the fuel cell electrolyte membrane by clamping the second and third electrolyte membranes by the first electrolyte membrane.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a cross-sectional view of a membrane electrode assembly including a fuel cell electrolyte membrane according to an embodiment disclosed here;

Fig. 2 is a cross-sectional view of the membrane electrode assembly including the fuel cell electrolyte membrane of an appropriate example according to the embodiment disclosed here;

Fig. 3 is a cross-sectional view of a fuel cell including the membrane electrode assembly illustrated in Fig. 2;

Fig. 4 is a perspective view illustrating a power generating function of the fuel cell illustrated in Fig. 3;

Fig. 5 is a cross-sectional view of a membrane electrode assembly according to a comparison example;

Fig. 6 is a diagram illustrating experimental results of the membrane electrode assemblies according to first to fourth examples of the embodiment and the comparison example; and

Fig. 7 is a cross-sectional view illustrating a modified example of the embodiment.

### DETAILED DESCRIPTION

An embodiment will be explained with reference to the attached drawings.

### [Membrane electrode assembly including fuel cell electrolyte membrane]

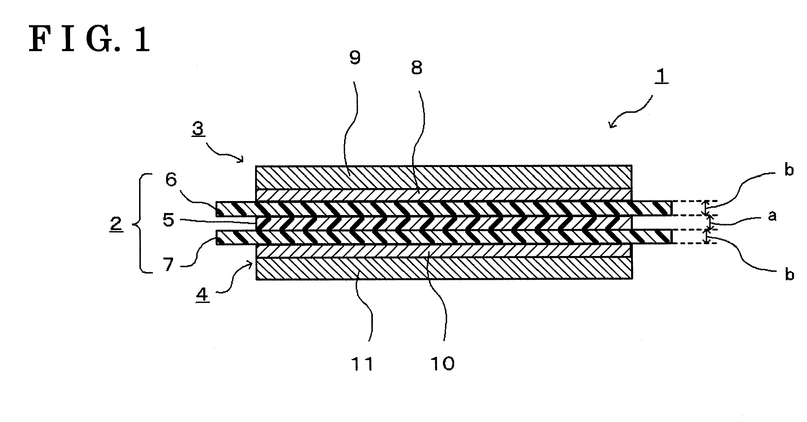

As illustrated in Fig. 1, a membrane electrode assembly 1 used for a fuel cell includes a fuel cell electrolyte membrane 2, an anode gas diffusion electrode 3, and a cathode gas diffusion electrode 4. The fuel cell electrolyte membrane 2 is sandwiched and hold between the anode gas diffusion electrode 3 and the cathode gas diffusion electrode 4.

The fuel cell electrolyte membrane 2 includes a first electrolyte membrane 5, a second electrolyte membrane 6, and a third electrolyte membrane 7. The second and third electrolyte membranes 6 and 7 are arranged so as to sandwich and held, i.e., clamp, the first electrolyte membrane 5 therebetween. The first electrolyte membrane 5 is formed from a basic polymer including phosphoric acid.

As the basic polymer, for example, polymer including at least one nitrogen atom that is generally used in the art, specifically, a polymer including one nitrogen atom at a backbone chain and/or a side chain is applicable. Such basic polymer desirably contains at least one nitrogen atom in the repeat unit, and further desirably contains an aromatic ring (for example, a five-membered ring or a six-membered ring) including at least one nitrogen atom in the repeat unit. At this time, copolymer also having the repeat unit not including the nitrogen atom in addition to the repeat unit including one nitrogen atom may be used as the basic polymer.

Specifically, for example, polybenzimidazoles, poly(pyridines), poly(pyrimidines), polyimidazoles, polybenzothiazoles, polybenzoxazoles, polyoxadiazoles, polyquinolines, polyquinoxalines, polythiadiazoles, poly(tetrazapyrenes), polyoxazoles, polythiazoles, polyvinylpyridines, or polyvinylimidazoles may be applicable to the basic polymer. At this time, the most desirable or suitable basic polymer is polybenzimidazoles. An example of a chemical structure of polybenzimidazoles is shown below.

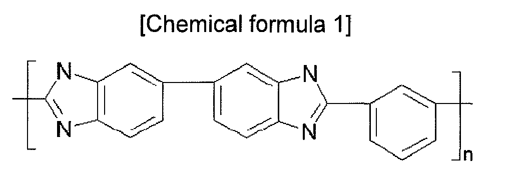

The basic polymer may be cross-linked at the fuel cell electrolyte membrane 2 by a cross-linking agent. Because of the cross-linking, the strength of polymer increases so as to restrain contraction of the fuel cell electrolyte membrane 2. A urethane cross-linking agent, for example, may be used as the cross-lining agent.

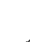

The phosphoric acid corresponds to either one of polyphosphoric acid (Hₙ₊₂PₙO₃ₙ₊₁ (n>1), which has a content of at least 83%, calculated as P₂O₅ by acidimetry, phosphonic acid (H₃PO₃), orthophosphoric acid (H₃PO₄), pyrophosphoric acid (H₄P₂O₇), triphosphoric acid (H₅P₃O₁₀) and metaphosphoric acid, or a mixture thereof.

A concentration of the phosphoric acid contained in the first electrolyte membrane 5 corresponds to a concentration (for example, a percent concentration by weight,) of phosphoric acid molecule contained and held at the first electrolyte membrane 5 by means of impregnation on or doping of the basic polymer, for example. At this time, the concentration of the phosphoric acid contained in the first electrolyte membrane 5 is adjustable by appropriate changes of the concentration of the phosphoric acid impregnated on the basic polymer (for example, 80% or greater by weight), temperature conditions (for example, 20 °C to 150 °C), and the impregnation time (for example, 10 to 20 minutes) and the doping amount of the phosphoric acid.

The second and third electrolyte membranes 6 and 7 arranged so as to sandwich and hold the first electrolyte membrane 5 from upper and lower sides respectively are also formed from a basic polymer containing a phosphoric acid as in the same way as the first electrolyte membrane 5. Materials of the basic polymer and the phosphoric acid constituting the second and third electrolyte membranes 6 and 7 are the same as those of the first electrolyte membrane 5. Further, the method for causing the phosphoric acid to be contained in the second and third electrolyte membranes 6 and 7 is the same as that of the first electrolyte membrane 5.

In a case where the phosphoric acid is contained in the aforementioned manner, according to the present embodiment, the concentration of the phosphoric acid in each of the second and third electrolyte membranes 6 and 7 is specified to be smaller than the concentration of the phosphoric acid in the first electrolyte membrane 5 so that the second and third electrolyte membranes 6 and 7 are firmer than the first electrolyte membrane 5.

The materials of the basic polymer and the phosphoric acid, the concentration of the phosphoric acid, the manufacturing method, and the like may be equalized or differentiated between the second and third electrolyte membranes 6 and 7.

A sol-gel membrane may be suitable for the first electrolyte membrane 5 while a phosphoric acid-impregnated cast membrane may be suitable for each of the second and third electrolyte membranes 6 and 7. At this time, the sol-gel membrane is the membrane produced by a sol-gel method while the phosphoric acid-impregnated cast membrane is the membrane which is produced by a cast method and on which the phosphoric acid is impregnated. The sol-gel membrane and the phosphoric acid-impregnated cast membrane will be explained in detail later. In a case where the first electrolyte membrane 5 and the second and third electrolyte membranes 6 and 7 are produced or manufactured by the aforementioned membrane making methods (i.e., deposition), the concentration of the phosphoric acid in each of the electrolyte membranes 5, 6, and 7 may be easily adjusted.

The anode gas diffusion electrode 3 is layered on a first side surface of the fuel cell electrolyte membrane 2 (i.e., on a surface where the second electrolyte membrane 6 is provided in Fig. 1). According to the present embodiment, the anode gas diffusion electrode 3 includes an anode catalyst layer 8 and an anode gas diffusion layer 9. The anode catalyst layer 8 includes Pt, Pd, Ir, Rh, Os, Ru, Au, or Ag, or alloy thereof and most desirably includes Pt. The anode catalyst layer 8 is arranged between the anode gas diffusion layer 9 and the second electrolyte membrane 6 so as to function as a catalyst for a chemical reaction at the anode gas diffusion electrode 3.

The anode gas diffusion layer 9 is generally formed by a flat structural member including conductivity and acid resistance. For example, the flat structural member such as carbon fiber paper, graphitized carbon fiber paper, carbon fiber fabric, and graphitized carbon fiber fabric is used for the anode gas diffusion layer 9. As necessary, the flat structural member is impregnated with conductive particle such as carbon black. Further, as necessary, a water proof process is conducted on the flat structural member.

The cathode gas diffusion electrode 4 is layered on a second side surface of the fuel cell electrolyte membrane 2 (i.e., on a surface where the third electrolyte membrane 7 is provided in Fig. 1). According to the present embodiment, the cathode gas diffusion electrode 4 includes a cathode catalyst layer 10 and a cathode gas diffusion layer 11. The cathode catalyst layer 10 also includes Pt, Pd, lr, Rh, Os, Ru, Au, or Ag, or alloy thereof and most desirably includes Pt. The cathode catalyst layer 10 is arranged between the cathode gas diffusion layer 11 and the third electrolyte membrane 7 so as to function as a catalyst for a chemical reaction at the cathode gas diffusion electrode 4.

The cathode gas diffusion layer 11 is also generally formed by a flat structural member including conductivity and acid resistance. Materials that may be added to the cathode gas diffusion layer 11 are also the same as those added to the anode gas diffusion layer 9.

The fuel cell electrolyte membrane 2 of the membrane electrode assembly 1 is configured in such a manner that the second and third electrolyte membranes 6 and 7 each having the relatively lower concentration of the phosphoric acid sandwich and hold the first electrolyte membrane 5 having the relatively higher concentration of the phosphoric acid. That is, surfaces of the second and third electrolyte membranes 6 and 7 which are firmer than the first electrolyte membrane 5 are in contact with the anode gas diffusion electrode 3 and the cathode gas diffusion electrode 4 respectively. Thus, a damage of the fuel cell electrolyte membrane 2 as a whole when the fuel cell electrolyte membrane 2 is pressed is reduced, which leads to a reduction of a cross leakage (i.e., a leak current) and an increase of durability in a state where the conductivity is secured. In addition, the membrane electrode assembly 1 includes the fuel cell electrolyte membrane 2 of which the damage is reduced in a case where the fuel cell electrolyte membrane 2 is pressed. As a result, the cross leakage of the membrane electrode assembly 1 as a whole is reduced to thereby enhance the durability while ensuring the conductivity.

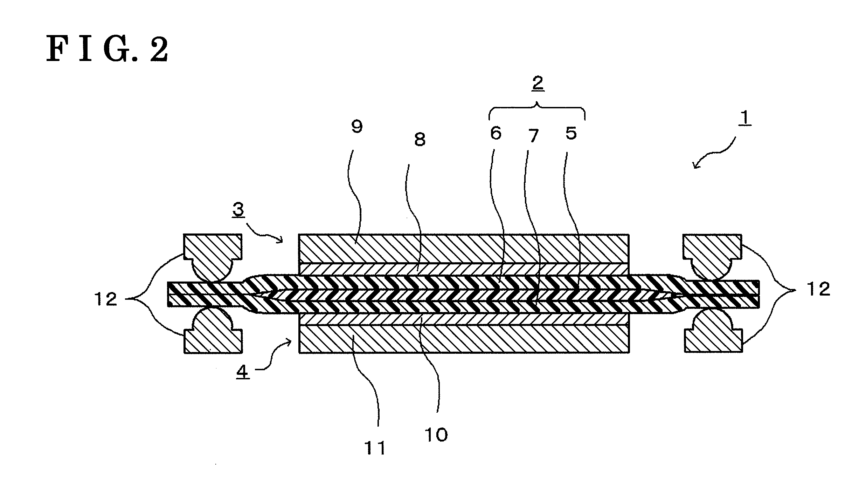

According to the fuel cell electrolyte membrane 2 of the present embodiment, end portions of the second and third electrolyte membranes 6 and 7 may extend outwardly relative to end portions of the first electrolyte membrane 5 in a planer direction of the first to third electrolyte membranes 5, 6, and 7 as illustrated in Fig. 1 so as to seal the first electrolyte membrane 5 by a sealing member, a joining of the end portions, for example. Details are explained as below with reference to Fig. 2.

As illustrated in Fig. 2, the membrane electrode assembly 1 further includes gaskets 12 in addition to the anode gas diffusion electrode 3, the cathode gas diffusion electrode 4, and the first to third electrolyte membranes 5 to 7. The gaskets 12 tightly close both end portions of the second and third electrolyte membranes 6 and 7 that sandwich and hold the first electrolyte membrane 5 therebetween. As a result, a leakage of the phosphoric acid from the first electrolyte membrane 5 that includes the relatively greater phosphoric acid is restrained. The gaskets 12 may have any configurations as long as the gaskets 12 sandwich and hold the second and third electrolyte membranes 6 and 7 to thereby seal the first electrolyte membrane 5. Alternatively, both the end portions of the second and third electrolyte membranes 6 and 7 may be joined to thereby seal the first electrolyte membrane 5.

According to the membrane electrode assembly 1 including the fuel cell electrolyte membrane 2 that has the aforementioned configuration, in addition to effects derived from the structure of the membrane electrode assembly 1 as mentioned above and illustrated in Fig. 1, a prevention of leakage of the phosphoric acid by sealing the first electrolyte membrane 5, i.e., an effective cross leakage reduction is achieved.

[Method for manufacturing the fuel cell electrolyte membrane]
The method for manufacturing the fuel cell electrolyte membrane 2 will be explained. The method for manufacturing the fuel cell electrolyte membrane 2 includes a manufacturing process of the first electrolyte membrane 5 (a first electrolyte membrane manufacturing process), a manufacturing process of the second electrolyte membrane 6 (a second electrolyte membrane manufacturing process), a manufacturing process of the third electrolyte membrane 7 (a third electrolyte membrane manufacturing process), and a manufacturing process of the fuel cell electrolyte membrane 2 (a fuel cell electrolyte membrane manufacturing process).

### [1. Method for manufacturing the first electrolyte membrane 5]

Primary materials of the basic polymer are mixed together while the phosphoric acid (desirably, polyphosphoric acid) is a solvent. Such mixture is stirred, heated, and reacted in a nitrogen gas atmosphere. The resulting reaction solution is subjected to a deposition by a known method such as a doctor blade in a heated state to thereby obtain the sol-gel membrane (i.e., the first electrolyte membrane 5) made by the sol-gel method.

### [2. Method for manufacturing second electrolyte membrane 6]

Primary materials of the basic polymer are mixed together while the phosphoric acid (desirably, polyphosphoric acid) is the solvent. Such mixture is stirred, heated, and reacted in the nitrogen gas atmosphere. The resulting reaction solution is put into extra-pure water so as to stop the reaction and clean. Further, neutralization and filtration are repeated on the reaction solution until the reaction solution is neutralized and thereafter is dried at a reduced pressure to thereby obtain resin. The resin is then dissolved in a solvent and the resulting filtrate is subjected to the deposition by a known method such as the doctor blade and is then dried to thereby obtain the cast membrane made by the cast method. Thereafter, the obtained cast membrane is impregnated with the phosphoric acid to obtain the phosphoric acid-impregnated cast membrane (i.e., the second electrolyte membrane 6).

### [3. Method for manufacturing the third electrolyte membrane 7]

The method for manufacturing the third electrolyte membrane 7 is the same as that of the second electrolyte membrane 6 so that the phosphoric acid-impregnated cast membrane (i.e., the third electrolyte membrane 7) is finally obtained. At this time, however, the deposition method and the final concentration of the phosphoric acid of the third electrolyte membrane 7 may be different from those of the second electrolyte membrane 6.

### [4. Method for manufacturing the fuel cell electrolyte membrane 2]

The first electrolyte membrane 5 serving as the sol-gel membrane manufactured as mentioned above is sandwiched and held from both side surfaces thereof by the second and third electrolyte membranes 6 and 7 to thereby obtain the fuel cell electrolyte membrane 2.

In the case of manufacturing the membrane electrode assembly 1, the fuel cell electrolyte membrane 2 obtained in the aforementioned manner is sandwiched and held from both side surfaces thereof by the anode gas diffusion electrode 3 and the cathode gas diffusion electrode 4. The anode gas diffusion electrode 3 is manufactured in a state where a catalyst ink containing Pt, for example, is applied to the anode gas diffusion layer 9 so as to form the anode catalyst layer 8 layered on the anode gas diffusion layer 9. In the same way, the cathode gas diffusion electrode 4 is manufactured in a state where the catalyst ink containing Pt, for example, is applied to the cathode gas diffusion layer 11 so as to form the cathode catalyst layer 10 layered on the cathode gas diffusion layer 11.

Afterwards, the resulting sandwich-shaped layer formed by the anode gas diffusion electrode 3, the fuel cell electrolyte membrane 2, and the cathode gas diffusion electrode 4 are pressed at a high temperature (i.e., hot-pressed). As a result, the membrane electrode assembly 1 as illustrated in Fig. 1 is manufactured.

According to the membrane electrode assembly 1 including the fuel cell electrolyte membrane 2 manufactured in the aforementioned manner, the second and third electrolyte membranes 6 and 7 (the phosphoric acid-impregnated cast membranes) arranged in contact with the anode gas diffusion electrode 3 and the cathode gas diffusion electrode 4 respectively have the lower phosphoric acid concentration and thus the greater stiffness than the first electrolyte membrane 5 (the sol-gel membrane). Thus, the damage of the fuel cell electrolyte membrane 2 as a whole when the fuel cell electrolyte membrane 2 is pressed is reduced, which leads to the reduction of cross leakage and the increase of durability while the conductivity is secured.

### [Fuel cell]

Next, a fuel cell 13 (a polymer electrolyte fuel cell) including the membrane electrode assembly 1 will be explained. Because the fuel cell electrolyte membrane 2 included in the membrane electrode assembly 1 has a feature according to the present embodiment, configurations of the fuel cell 13 and a single cell thereof may have any of known configurations. In the following, examples of such configurations are described below.

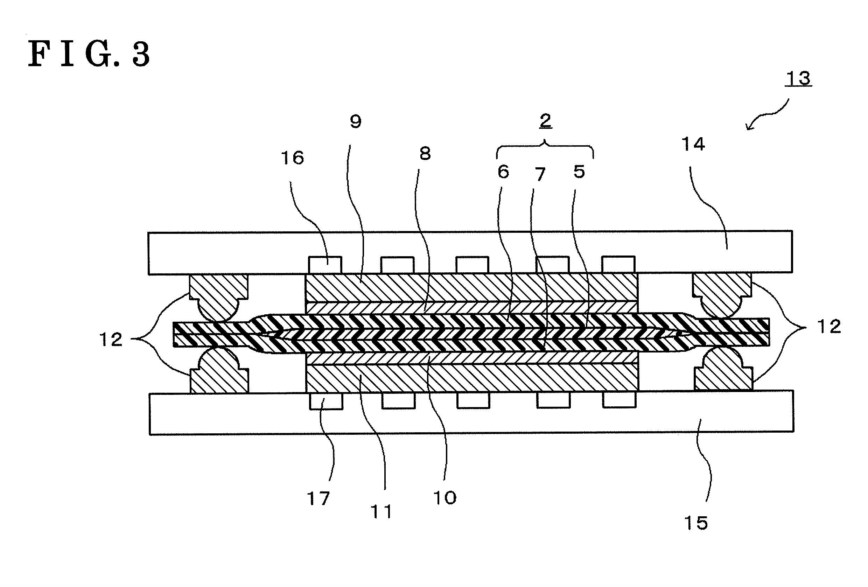

Fig. 3 illustrates a single cell of the fuel cell 13 including the fuel cell electrolyte membrane 2 according to the present embodiment. As illustrated in Fig. 3, the fuel cell 13 includes an anode separator 14 and a cathode separator 15 in addition to the membrane electrode assembly 1 illustrated in Fig. 2.

The anode separator 14 includes plural protruding portions and recess portions alternately arranged. Fuel gas passages 16 through which a nitrogen containing gas (i.e., a fuel gas) flows are formed at the anode separator 14. The anode separator 14 is made of a conductive material.

The cathode separator 15 includes plural protruding portions and recess portions alternately arranged. Oxidant gas passages 17 through which an oxygen containing gas (i.e., an oxidant gas) such as air flows are formed at the cathode separator 15. The cathode separator 15 is also made of the conductive material.

Because of the aforementioned separators 14 and 15, the fuel gas and the oxidant gas separately and evenly flow through the fuel cell 13. In addition, water and the like generated within the fuel cell 13 is immediately discharged to the outside thereof. Fig. 3 illustrates cross-sections of the fuel gas passages 16 arranged in parallel to one another and the oxidant gas passages 17 arranged in parallel to one another for an easy understanding.

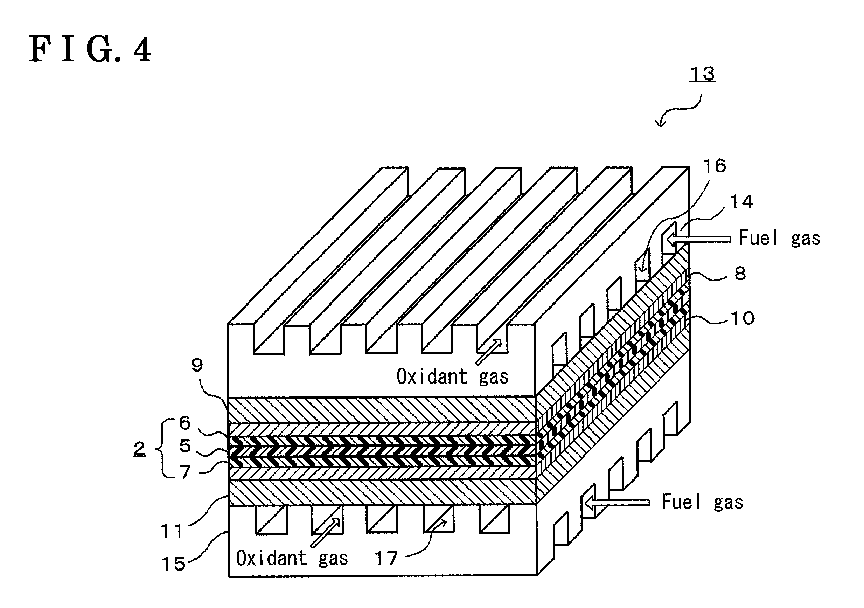

Fig. 4 is a perspective view for explaining a power generating function of the fuel cell 13. As illustrated in Fig. 4, generally, the fuel gas passages 16 and the oxidant gas passages 17 are formed at the fuel cell 13. The fuel gas and the oxidant gas flow in arrow directions in Fig. 4 so that the fuel cell 13 performs the power generation.

Specifically, the fuel gas (i.e., hydrogen gas) makes contact with the anode catalyst layer 8 to thereby cause the reaction 2Hz →4H⁺ + 4e⁻. "H⁺" generated in the aforementioned reaction moves through the fuel cell electrolyte membrane 2 and reaches the cathode gas diffusion electrode 4. Then, the reaction 4H⁺+ 4e⁻ + O₂ → 2H₂O is caused relative to the oxidant gas (i.e., oxygen in air) by means of the cathode catalyst layer 10 to thereby obtain water. According to the aforementioned reaction, the fuel cell 13, (the polymer electrolyte fuel cell) performs the power generation by reverse of the electrolysis reaction with a usage of hydrogen and oxygen. The fuel cell 13 is used in a temperature environment from 140 °C to 160 °C, for example.

The fuel cell 13 includes the fuel cell electrolyte membrane 2 of which the damage is reduced in a case where the fuel cell electrolyte membrane 2 is pressed. As a result, the cross leakage of the fuel cell 13 as a whole is reduced to thereby enhance the durability while ensuring the conductivity.

### [First example]

According to a first example of the embodiment, the membrane electrode assembly 1 includes the fuel cell electrolyte membrane 2 where a thickness "a" (see Fig. 1) of the first electrolyte membrane 5 is 40 µm, a thickness "b" (see Fig. 1) of each of the second and third electrolyte membranes 6 and 7 is 25 µm, and the basic polymer of each of the second and third electrolyte membranes 6 and 7 is polybenzimidazole (PBI).

First, the sol-gel membrane constituting the first electrolyte membrane 5 is prepared. Specifically, 7.587g of 3,3'-Diaminobenzidine (manufactured by Sigma-Aldrich) and 6.000g of Isophthalic acid (manufactured by Sigma-Aldrich) are mixed in a 250 milliliter three-necked separable flask while 1.23g of Polyphosphoric acid (manufactured by Sigma-Aldrich) is the solvent. Such mixture is heated in an oil bath at 200 °C under a mechanical stirring with a nitrogen gas flow atmosphere so as to react for 8 hours. The resulting reaction solution is substantially in a dark brown sticky paste form. The chemical reaction formula in the aforementioned reaction is shown as below.

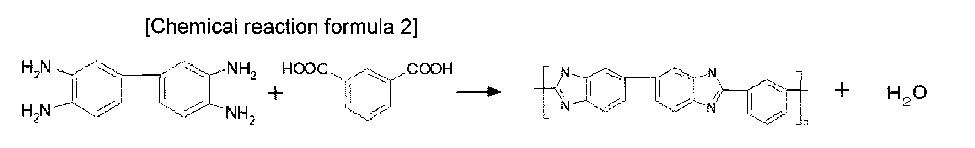

Afterwards, the reaction solution is dropped on a glass plate at 200 °C to thereby form the sol-gel membrane by means of the doctor blade method. At this time, the thickness "a" of the sol-gel membrane (i.e., first electrolyte membrane 5) is specified to be 40 µm.

Next, the phosphoric acid-impregnated cast membrane forming the second and third electrolyte membranes 6 and 7 is manufactured. Specifically, in the same way as manufacturing the aforementioned sol-gel membrane, the reaction solution substantially in the dark brown sticky paste form is obtained. Then, the reaction solution is put into 2.5 liters of extra-pure water (>18MΩ.cm) to stop the reaction. The reaction solution is cleaned several times in the extra-pure water and the neutralization and filtration are repeated in 10% ammonia solution by weight (manufactured by Wako Pure Chemical Industries) until the reaction solution is neutralized. Thereafter, the reaction solution is dried for 16 hours at 120 °C under the reduced pressure to thereby obtain PBI resin. The PBI resin is dissolved in dimethylacetamide (DMAc, by Wako Pure Chemical Industries) in a state where the PBI resin is 10% by weight. The resulting filtrate is subjected to the deposition by the doctor blade method and is dried to obtain the cast membrane. At this time, the thickness of the cast membrane is specified to be 10 µm.

The aforementioned cast membrane is impregnated in 85% phosphoric acid solution by weight for 24 hours to thereby obtain the phosphoric acid-impregnated cast membrane where the phosphoric acid is doped. The thickness of the phosphoric acid-impregnated cast membrane is 25 µm.

Next, the anode gas diffusion electrode 3 and the cathode gas diffusion electrode 4 are manufactured. A dispersion solution of carbon black (VULCAN XC72R by CABOT) and water repellant (Polyflon D1 by DAIKIN) is impregnated with carbon paper (TGP-H-060 by TORAY) and is baked at 380 °C for 1 hour to thereby manufacture the anode gas diffusion layer 9 and the cathode gas diffusion layer 11. The thickness of both of the gas diffusion layers 9 and 11 is 250 µm.

Next, 6g of supported carbon catalyst (Pt concentration of 50% by weight, manufactured by TANAKA KIKINZOKU) is mixed with 40g of N-methyl pyrrolidone (NMP, manufactured by Wako Pure Chemical Industries) and the resulting mixture is stirred for 30 minutes at room temperature. Then, PBI solution regulated to 12.5% concentration by weight by DMAc is combined with the mixture so that PBI solid content becomes 10% by weight relative to the supported carbon catalyst. The resulting mixture is stirred for 30 minutes and thereafter polyvinylidene fluoride (PVDF, manufactured by Wako Pure Chemical Industries) solution regulated to 10% concentration by weight by NMP is combined with the mixture so that PVDF solid content becomes 25% by weight relative to the supported carbon catalyst. The resulting mixture is stirred for 30 minutes to thereby obtain the catalyst ink.

The catalyst ink obtained in the aforementioned manner is applied to respective surfaces of the anode gas diffusion layer 9 and the cathode gas diffusion layer 11 by an applicator. Then, the anode gas diffusion layer 9 and the cathode gas diffusion layer 11 are dried for 30 minutes at 150 °C to thereby remove the solvent (i.e., the PBI solution and the PVDF solution). As a result, the anode gas diffusion electrode 3 where the anode catalyst layer 8 is layered on the anode gas diffusion layer 9 and the cathode gas diffusion electrode 4 where the cathode catalyst layer 10 is layered on the cathode gas diffusion layer 11 are obtained. The thickness of each of the catalyst layers 8 and 10 is 30 µm. That is, the thickness of the anode gas diffusion electrode 3 and the cathode gas diffusion electrode 4 is 280 µm.

The membrane electrode assembly 1 is manufactured by using the first, second, and third electrolyte membranes 5, 6, and 7, the anode gas diffusion electrode 3, and the cathode gas diffusion electrode 4. Specifically, first, the first electrolyte membrane 5 is sandwiched and held between the second electrolyte membrane 6 and the third electrolyte membrane 7 to thereby manufacture the fuel cell electrolyte membrane 2 formed into a sandwiched shape. Further, the fuel cell electrolyte membrane 2 is sandwiched between the anode gas diffusion electrode 3 and the cathode gas diffusion electrode 4 so that the catalyst layers 8 and 10 make contact with the side surfaces (i.e., the first and second side surfaces) of the fuel cell electrolyte membrane 2. The assembly of the fuel cell electrolyte membrane 2 and the catalyst layers 8 and 10 are hot-pressed at 140°C and 8Mpa for 1 minute to thereby obtain the membrane electrode assembly 1 as illustrated in Fig. 1.

Then, a leak current is measured on the aforementioned membrane electrode assembly 1. Specifically, 0.2V voltage is applied to both poles of the membrane electrode assembly 1 to which 60N/cm² is applied at room temperature. The electric current value after one minute is defined to be the leak current. The membrane electrode assembly 1 of the first example is 1.5 mA.

Further, the electric conductivity of the membrane electrode assembly 1 is measured. Specifically, an alternating current impedance measurement by a four-terminal method is conducted (using Chemical Impedance meter 3532-380 by HIOKI) under conditions of 160°C to thereby obtain the electric conductivity based on the impedance. The conductivity of the membrane electrode assembly 1 of the first example is 0.054S/cm.

### [Second example]

According to a second example of the embodiment, the membrane electrode assembly 1 includes the fuel cell electrolyte membrane 2 where the thickness "a" of the first electrolyte membrane 5 is 40 µm, the thickness "b" of each of the second and third electrolyte membranes 6 and 7 is 50 µm, and the basic polymer of each of the second and third electrolyte membranes 6 and 7 is polybenzimidazole (PBI).

The method for manufacturing the sol-gel membrane constituting the first electrolyte membrane 5, the method for manufacturing the phosphoric acid-impregnated cast membrane constituting the second and third electrolyte membranes 6 and 7, the method for manufacturing the anode gas diffusion electrode 3 and the cathode gas diffusion electrode 4, the method for manufacturing the membrane electrode assembly 1, and the method for measuring the leak current are the same as those of the first example except for the following items.

In the second example, in the case of manufacturing the phosphoric acid-impregnated cast membrane forming the second and third electrolyte membranes 6 and 7, the thickness of the cast membrane formed by the doctor blade method is defined to be 20 µm so that the thickness of the phosphoric acid-impregnated cast membrane doped with the phosphoric acid becomes 50 µm. As a result, the leak current of the membrane electrode assembly 1 is 1.2 mA.

### [Third example]

According to a third example of the embodiment, the membrane electrode assembly 1 includes the fuel cell electrolyte membrane 2 where the thickness "a" of the first electrolyte membrane 5 is 60 µm, the thickness "b" of each of the second and third electrolyte membranes 6 and 7 is 25 µm, and the basic polymer of each of the second and third electrolyte membranes 6 and 7 is PBI.

The method for manufacturing the sol-gel membrane constituting the first electrolyte membrane 5, the method for manufacturing the phosphoric acid-impregnated cast membrane constituting the second and third electrolyte membranes 6 and 7, the method for manufacturing the anode gas diffusion electrode 3 and the cathode gas diffusion electrode 4, the method for manufacturing the membrane electrode assembly 1, and the method for measuring the leak current are the same as those of the first example except for the following items.

In the third example, in the case of manufacturing the sol-gel membrane constituting the first electrolyte membrane 5, the thickness of the sol-gel membrane formed by the doctor blade method is specified to be 60 µm. As a result, the leak current of the membrane electrode assembly 1 is 1.3 mA.

### [Fourth example]

According to a fourth example of the embodiment, the membrane electrode assembly 1 includes the fuel cell electrolyte membrane 2 where the thickness "a" of the first electrolyte membrane 5 is 60 µm, the thickness "b" of each of the second and third electrolyte membranes 6 and 7 is 50 µm, and the basic polymer of each of the second and third electrolyte membranes 6 and 7 is PBI.

The method for manufacturing the sol-gel membrane constituting the first electrolyte membrane 5, the method for manufacturing the phosphoric acid-impregnated cast membrane constituting the second and third electrolyte membranes 6 and 7, the method for manufacturing the anode gas diffusion electrode 3 and the cathode gas diffusion electrode 4, the method for manufacturing the membrane electrode assembly 1, and the method for measuring the leak current are the same as those of the first example except for the following items.

In the fourth example, in the case of manufacturing the sol-gel membrane constituting the first electrolyte membrane 5, the thickness of the sol-gel membrane formed by the doctor blade method is specified to be 60 µm. In the case of manufacturing the phosphoric acid-impregnated cast membrane constituting the second and third electrolyte membranes 6 and 7, the thickness of the cast membrane formed by the doctor blade method is defined to be 20 µm so that the thickness of the phosphoric acid-impregnated cast membrane doped with the phosphoric acid becomes 50 µm. As a result, the leak current of the membrane electrode assembly 1 is 1.2 mA.

### [Comparison example]

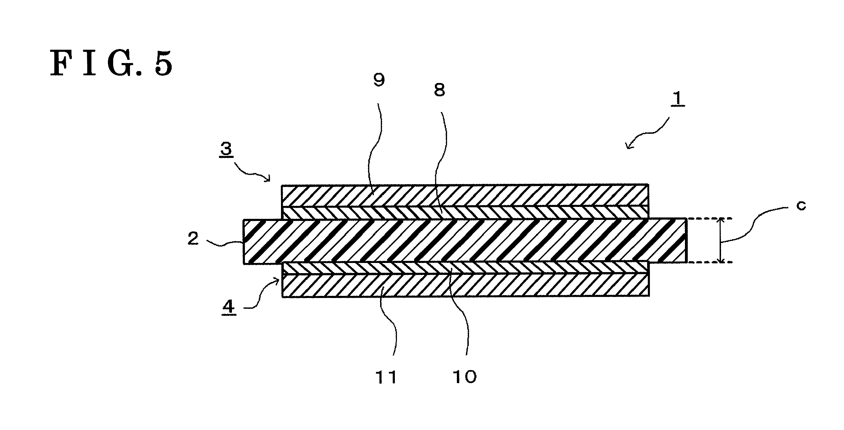

According to a comparison example, as illustrated in Fig. 5, the membrane electrode assembly 1 includes the fuel cell electrolyte membrane 2, the anode gas diffusion electrode 3 and the cathode gas diffusion electrode 4 which sandwich and hold the fuel cell electrolyte membrane 2 therebetween.

The fuel cell electrolyte membrane 2 is manufactured in the same way as manufacturing the sol-gel membrane constituting the first electrolyte membrane 5 in the first example so that a thickness "c" of the fuel cell electrolyte membrane 2 is specified to be 120 µm. In other points, the manufacturing method of the membrane electrode assembly 1 is almost the same as that of the first example. The leak current and the electric conductivity of the membrane electrode assembly 1 including the fuel cell electrolyte membrane 2 of the comparison example are measured in the same way as the first example. As a result, the leak current is 379.5 mA and the conductivity is 0.094 S/cm.

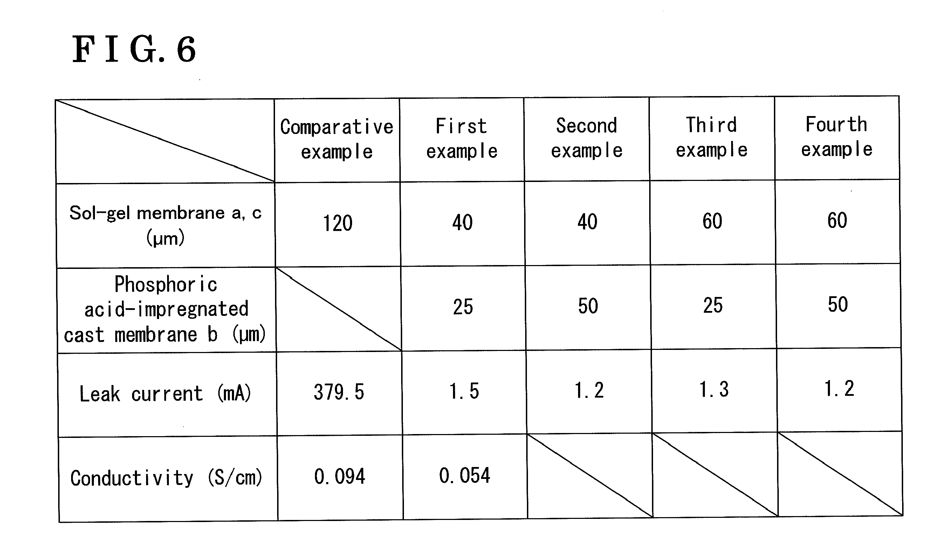

Fig. 6 shows experimental results of the membrane electrode assembly 1 of the first to forth examples of the embodiment and the comparative example. As shown in Fig. 6, when comparing the leak current of the membrane electrode assembly 1 including the fuel cell electrolyte membrane 2 of each of the first to fourth examples and the leak current of the membrane electrode assembly 1 of the comparison example, the leak current of the membrane electrode assembly 1 of the first to fourth examples decreases significantly as compared to the leak current of the membrane electrode assembly 1 of the comparison example. The electric conductivity of the membrane electrode assembly 1 of the first example is smaller than that of the comparison example, however, is still sufficient for the use as the fuel cell electrolyte membrane.

The aforementioned embodiments may be appropriately modified or changed.

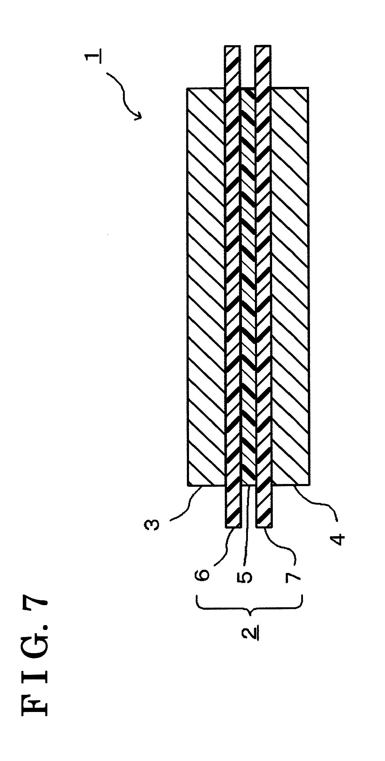

For example, the anode gas diffusion electrode 3 or the cathode gas diffusion electrode 4 may not be an electrode structure where the anode catalyst layer 8 or the cathode catalyst layer 10 is layered. Fig. 7 is a cross-sectional view of a modified example of the membrane electrode assembly 1 including the fuel cell electrolyte membrane 2 of the embodiment. As illustrated in Fig. 7, the anode gas diffusion electrode 3 and the cathode gas diffusion electrode 4 are simply constituted by the anode gas diffusion layer 9 and the cathode gas diffusion layer 11. In such case, each of the anode gas diffusion layer 9 and the cathode gas diffusion layer 11 may be impregnated with a catalyst-supported carbon particle, for example, or each of the anode gas diffusion layer 9 and the cathode gas diffusion layer 11 may support the catalyst.

In a case of manufacturing the membrane electrode assembly 1 including the fuel cell electrolyte membrane 2 as illustrated in Fig. 2, a process for tightly closing the both end portions of the second and third electrolyte membranes 6 and 7 sandwiching and holding the first electrolyte membrane 5 is applied after the manufacture of the fuel cell electrolyte membrane 2 and before the hot press to obtain the membrane electrode assembly 1.

According to the aforementioned embodiment, the fuel cell electrolyte membrane 2, the membrane electrode assembly 1, the fuel cell 13, and the method for manufacturing the fuel cell electrolyte membrane 2 that reduce the cross leakage is obtained.

According to the aforementioned embodiment, the fuel cell electrolyte membrane 2 includes the first electrolyte membrane 5 formed from the basic polymer including the phosphoric acid, and the second and third electrolyte membranes 6 and 7 formed from the basic polymer including the phosphoric acid and clamping the first electrolyte membrane 5 between the second and third electrolyte membranes 6 and 7. The phosphoric acid contained in the first electrolyte membrane 5 is greater than the phosphoric acid contained in each of the second and third electrolyte membranes 6 and 7 in concentration.

In addition, the first electrolyte membrane 5 is the sol-gel membrane and the second and third electrolyte membranes 6 and 7 are the phosphoric acid-impregnated cast membranes.

Further, the basic polymer is a polybenzimidazole.

Furthermore, he second and third electrolyte membranes 6 and 7 extend outwardly relative to end portions of the first electrolyte membrane 5 in the planar direction of the first to third electrolyte membranes 5, 6, and 7, the first electrolyte membrane 5 being sealed by end portions of the second and third electrolyte membranes 6 and 7.

Furthermore, the membrane electrode assembly 1 includes the fuel cell electrolyte membrane 2, the anode gas diffusion electrode 3 layered on the first side surface of the fuel cell electrolyte membrane 2, and the cathode gas diffusion electrode 4 layered on the second side surface of the fuel cell electrolyte membrane 2.

Furthermore, the fuel cell 13 includes the membrane electrode assembly 1, the anode separator 14 making contact with the anode gas diffusion electrode 3 of the membrane electrode assembly 1 and formed by the fuel gas passage 16, and the cathode separator 15 making contact with the cathode gas diffusion electrode 4 of the membrane electrode assembly 1 and formed by the oxidant gas passage 17.

Furthermore, the method of manufacturing the fuel cell electrolyte membrane 2 includes the first electrolyte membrane manufacturing process for manufacturing the first electrolyte membrane 5 by depositing the basic polymer including the phosphoric acid, the second electrolyte membrane manufacturing process for manufacturing the second electrolyte membrane 6 by depositing the basic polymer including the phosphoric acid that has the concentration lower than the concentration of the phosphoric acid contained in the first electrolyte membrane 5, the third electrolyte membrane manufacturing process for manufacturing the third electrolyte membrane 7 by depositing the basic polymer including the phosphoric acid that has the concentration lower than the concentration of the phosphoric acid contained in the first electrolyte membrane 5, and the fuel cell electrolyte membrane manufacturing process for manufacturing the fuel cell electrolyte membrane 2 by clamping the second and third electrolyte membranes 6 and 7 by the first electrolyte membrane 5.

Furthermore, the first electrolyte membrane 5 is formed by the sol-gel method in the first electrolyte membrane manufacturing process. The second electrolyte membrane 6 is formed by the cast method and thereafter impregnated with the phosphoric acid solution in the second electrolyte membrane manufacturing process. The third electrolyte membrane 7 is formed by the cast method and thereafter impregnated with the phosphoric acid solution in the third electrolyte membrane manufacturing process.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A fuel cell electrolyte membrane, comprising:
a first electrolyte membrane formed from a basic polymer including a phosphoric acid; and
second and third electrolyte membranes each formed from a basic polymer including a phosphoric acid and clamping the first electrolyte membrane between the second and third electrolyte membranes,
the phosphoric acid contained in the first electrolyte membrane being greater than the phosphoric acid contained in each of the second and third electrolyte membranes in concentration.

2. The electrolyte membrane according to claim 1, wherein the first electrolyte membrane is a sol-gel membrane and the second and third electrolyte membranes are phosphoric acid-impregnated cast membranes.

3. The electrolyte membrane according to claim 1, wherein the basic polymer is a polybenzimidazole.

4. The electrolyte membrane according to claim 1, wherein the second and third electrolyte membranes extend outwardly relative to end portions of the first electrolyte membrane in a planar direction of the first to third electrolyte membranes, the first electrolyte membrane being sealed by end portions of the second and third electrolyte membranes.

5. A membrane electrode assembly including the fuel cell electrolyte membrane according to claim 1, an anode gas diffusion electrode layered on a first side surface of the fuel cell electrolyte membrane, and a cathode gas diffusion electrode layered on a second side surface of the fuel cell electrolyte membrane.

6. A fuel cell including the membrane electrode assembly according to claim 5, an anode separator making contact with the anode gas diffusion electrode of the membrane electrode assembly and formed by a fuel gas passage, and a cathode separator making contact with the cathode gas diffusion electrode of the membrane electrode assembly and formed by an oxidant gas passage.

7. A method of manufacturing a fuel cell electrolyte membrane, comprising;
a first electrolyte membrane manufacturing process for manufacturing a first electrolyte membrane by depositing a basic polymer including a phosphoric acid;
a second electrolyte membrane manufacturing process for manufacturing a second electrolyte membrane by depositing a basic polymer including a phosphoric acid that has a concentration lower than a concentration of the phosphoric acid contained in the first electrolyte membrane;
a third electrolyte membrane manufacturing process for manufacturing a third electrolyte membrane by depositing a basic polymer including a phosphoric acid that has a concentration lower than the concentration of the phosphoric acid contained in the first electrolyte membrane; and
a fuel cell electrolyte membrane manufacturing process for manufacturing the fuel cell electrolyte membrane by clamping the second and third electrolyte membranes by the first electrolyte membrane.

8. The method of manufacturing the fuel cell electrolyte membrane according to claim 7, wherein
the first electrolyte membrane is formed by a sol-gel method in the first electrolyte membrane manufacturing process,
the second electrolyte membrane is formed by a cast method and thereafter impregnated with a phosphoric acid solution in the second electrolyte membrane manufacturing process, and
the third electrolyte membrane is formed by the cast method and thereafter impregnated with the phosphoric acid solution in the third electrolyte membrane manufacturing process.
